# EUROPEAN PATENT APPLICATION

(11) **EP 1 265 128 A1**
(43) Date of publication of application: **11.12.2002**
(21) Application number: 01304990.3
(22) Date of filing: 07.06.2001
(51) Int. Cl.: G06F 3/033

(54) **Internet service via broadcast data receiver**

(71) Applicant: Pace Micro Technology PLC, Shipley, West Yorkshire BD18 3LF (GB)
(72) Inventor: Moir, Mark, Waterbeach, Cambridge, CB5 9QF (GB)
(74) Representative: Wood, Graham

(57) **Abstract**

The invention relates to a television system which includes a broadcast data receiver connected to or provided as an integral part of a television set with a display screen. The system is also provided with an internet access capability which typically allows the display of only one internet page window across the screen at a time. In accordance with the invention a display of information identifying each of the live internet page windows available at an instant can be selectively displayed and, from the display, the user can choose a particular page window for display on the screen.

## Description

The present invention relates to an improvement in the generation of an internet service and display of the same via a television system including a television set or display screen connected to a broadcast data receiver and which has the capability of accessing the internet when connected to a suitable communications link.

Broadcast data receivers are typically provided to receive digital data which is broadcast from a remote location and through which data can be received, decoded and processed to generate television and/or video programmes. However, in addition, auxiliary services can also be supplied as the broadcast data receiver is also typically connected to a telecommunication system either by cable or other communication network. Through this communication, services such as internet or home shopping services can be provided and it is to this particular function to which the improvement relates.

Conventionally, in a PC desktop environment with an internet capability running, the user is able to have multiple windows of information displayed on a display screen, open, which shows various web pages at the same time. The user is able to see the different windows at once by resizing the pages to fit alongside each other, or to have them stacked on top of each other. In any case the user can select which of the windows they want to read by clicking on the title bar of the window or clicking on the window's icon on the icon bar at the bottom of the screen. This brings the window to the top of the stack.

In a Broadcast Data Receiver (BDR) environment where the data is typically displayed on a display screen of a TV set, the user interface environment is very different. There is no icon bar in the same sense as the PC, and the user has no title bars to click on (or a pointer in the traditional sense). Until now it has been very much a single tasking interface where all internet use or web browsing is done with a single main window display across the display screen, with no opportunity to stack or space a plurality of window displays of different internet pages on the screen.

The aim of the present invention is to overcome this problem and to provide the opportunity for the user to be able to stack or space a number of windows on a display screen connected to a BDR providing an internet service. Furthermore, in addition to this, there is provided a means to allow the user to navigate between said multiple window displays.

In a first aspect of the invention there is provided a television system including a broadcast data receiver (BDR) connected to or provided as part of a television set with a display screen, said system provided to allow the generation of television programmes and also provided with the capability for internet access, said internet service allowing the generation of a series of internet page windows, said windows displayed on the display screen connected to the BDR, and characterised in that there is provided a display generated on the display screen indicative of the number of page windows live and available for user selection at that instant.

Typically the relative position of the page window displayed at that instant is indicated to the user with respect to the other available page windows.

In one embodiment the display generated indicate which of the page windows is at the fore with respect other available page windows and hence viewable on the display screen at that instant.

In one embodiment the user can select a page window from the display and move the same to the fore for display by interaction with the BDR and the display alters to indicate which of the page windows has been selected.

Typically the user interacts with the BDR by using a remote control device which is provided to allow control of the BDR and/or television system as a whole. In one embodiment the user can select the display and then scroll through the page windows indicated on the display to select a particular window page using up and down arrow keys on the remote control device with the signals generated passing from the remote control device to the broadcast data receiver and hence the display changed and the page window displayed accordingly.

In one embodiment the display on screen of the page window display can be selectively enabled and disabled. The display portion may also be selectively removed so as not to hide any part of the displayed page.

A specific embodiment of the invention is now described with reference to the accompanying drawings, wherein:-
Figure 1 illustrates a display in accordance with the invention;
Figure 2 illustrates an alternative display format and;

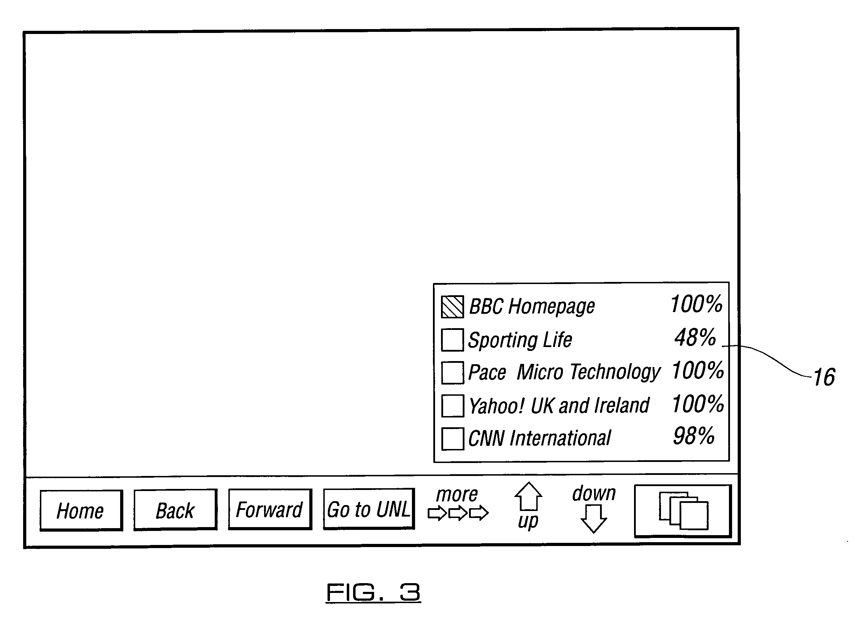

Figure 3 illustrates a yet further feature of the invention.

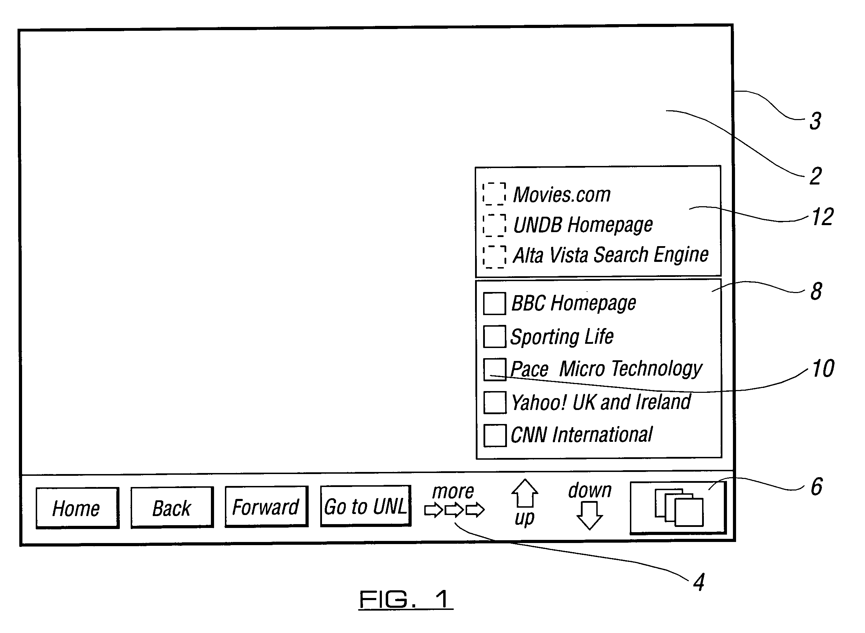

Referring firstly to Figure 1, there is shown a standard internet page window 2 on display on a display screen of a television set 3. This display can be generated using a known television system with a broadcast data receiver and connection to a telecommunication system which allows the internet capability to be provided and the page windows generated to be more easily selectable by the user of the system.

At the bottom of the screen display there is generated a short toolbar 4 which, when the icons shown are selected, allows the user to perform certain options and allows navigation to other "live" internet pages available for viewing at that instant.

A number of new internet page windows can be generated by the actions of a user as they would in any conventional internet server operation. However, in accordance with the invention, every new page which is generated and remains live is identified and the identifier, such as the page title, is added to a memory in the system so as to form a list of available page window titles which are live at that instant. When a page window is closed, the title is removed from the list.

In order to represent the list of titles for the live page windows to the user, in accordance with the invention, an icon 6 is generated and shown on the screen, on the right hand side of the screen in this example. When the icon is selected by the user, typically via interaction with the system remote control, a page windows display 8 is generated. This display is populated with the currently 'live' page windows with a brief title of each page provided and generated from the data stored in the memory.

The display can be dynamically altered in that each page window entry is positioned with respect to the others in respect of a stacking arrangement which can be arranged for example, in order of user initiation of the page.

The user can navigate between each of the page window entries using a standard remote control and select the icon 6 to open or close the display 8 as they require.

In the example shown there are five live page windows available for selection. The currently displayed page window is highlighted as illustrated by the icon 10 beside the title of the page. When the display 8 is open and being shown, the user can move the highlighted icon 10 up and down the list of page window titles and then select the page window that they want to have displayed. This causes the Broadcast data receiver to "move" the selected page window to the front of the stack such that the same is then viewable on the display screen.

The display 8 can be extendable, as demonstrated by the broken line display portion 12 in Figure 1 to, for example, include previously selected page windows which are not live but have been previously selected or have been identified by the user as favourite sites and which may, by the user selection of the same by the highlighting method described previously, be selected and the site accessed.

When the display 8is generated, it is likely that at least part of the page window displayed at that time will be obscured. However in practice this is unlikely to be a problem as the user is likely to want to change the page window being displayed anyway and the display can be removed when the new page is selected.

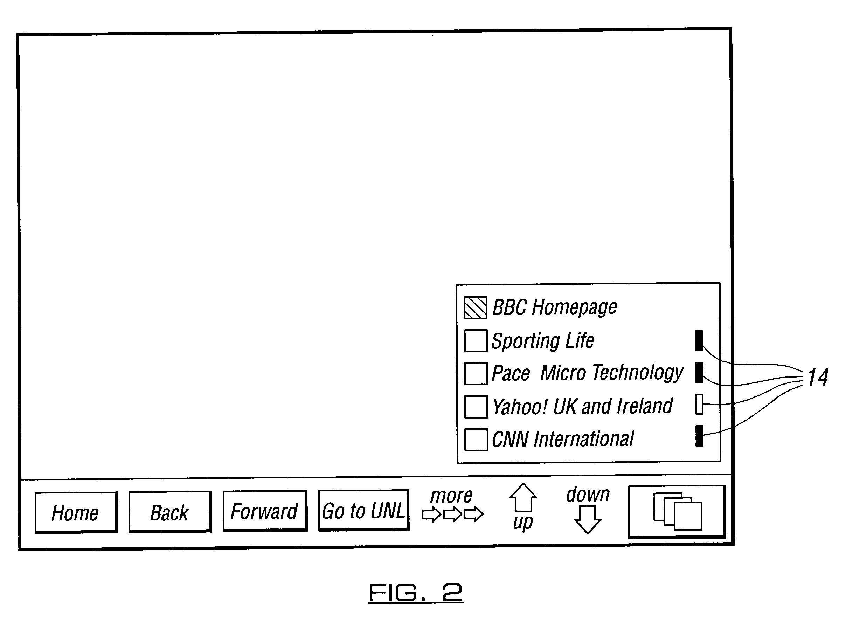

A further facility of the invention is shown in Figure 2 in that particular keys on the remote control device, such as the fasttext coloured buttons on the remote control handset, can be mapped and allocated to the last four, for example, pages which have been selected as indicated by the icons 14.

This allows the user to open the list of active windows and then to quickly switch to the latest four via the indicated button colours in the remote control.

A further facility can be for the current 'load' status of each page to be displayed 16 in the display alongside the title for each of the live page windows. This displays to the user how much of the page data remains to be loaded so that the user could open the window, then return to a former page until the page has finished being fetched, loaded and available for complete display.

Thus the present invention provides a multi-page window display selection system to be provided without the need for a full PC style desktop environment, and which can be utilised in a BDR internet provision. Furthermore, there is no need for another permanently displayed list of active windows like an icon bar which would reduce the screen area size and yet the user can see when active windows have been completely loaded without needing to have them displayed beforehand.

## Claims

1. A television system including a broadcast data receiver (BDR) connected to or provided as part of a television set with a display screen, said system provided to allow the generation of television programmes and also provided with the capability for internet access, said internet service allowing the generation of a series of internet page windows, said windows displayed on the display screen connected to the BDR, and **characterised in that** there is provided a display generated on the display screen indicative of the number of page windows live and available for user selection at that instant.

2. A system according to claim 1 **characterised in that** the relative position of the page window displayed at that instant is indicated with respect to the other available page windows.

3. A system according to claim 2 **characterised in that** the display generated indicates which of the page windows is at the fore with respect to the stack of available page windows and hence viewable on the display screen at that instant.

4. A system according to claim 1 **characterised in that** the user can select a page window from those in the display for display on the display screen by interaction with the BDR.

5. A system according to claim 4 **characterised in that** the display alters to indicate which of the page windows has been selected for display.

6. A system according to claim 4 **characterised in that** the user interacts with the BDR by using a remote control device which is provided to allow control of the BDR and/or television system as a whole.

7. A system according to claim 1 **characterised in that** the display on screen of the page windows display can be selectively enabled and disabled by the user.

8. A system according to claim 1 **characterised in that** the page windows display includes details of selected internet sites which can be selected and opened by the user by selecting the same on the screen display.

9. A system according to claim 1 **characterised in that** the page windows display includes next to each of the page windows titles an indication as to whether the data required for the live page windows is fully or partially loaded in the system.
